# EUROPEAN PATENT APPLICATION

(11) **EP 4 831 947 A1**
(43) Date of publication of application: **28.10.2026**
(21) Application number: 23962308.5
(22) Date of filing: 22.12.2023
(51) Int. Cl.: G07D 7/189

(54) **BILL HANDLING DEVICE, FOREIGN MATTER DETECTION METHOD, AND FOREIGN MATTER DETECTION PROGRAM**

(71) Applicant: Japan Cash Machine Co., Ltd., Osaka-shi, Osaka 556-0011 (JP)
(72) Inventor: WENG, Yuqing, Inagi-shi, Tokyo 206-8555 (JP)
(74) Representative: Haseltine Lake Kempner LLP
(86) International application number: PCT/JP2023/046286
(87) International publication number: WO 2025/134392

(57) **Abstract**

Provided are a banknote handling device, a foreign object detection method, and a foreign object detection program that improve the accuracy of foreign object detection. A light source (103) irradiates a banknote (B) with light. A camera (105) captures a surface image of the banknote (B) based on reflected light of the light emitted from the light source (103). A data conversion unit converts the surface image captured by the camera (105) into grayscale data. A measurement unit (121) measures the thickness of the banknote (B). A target region identifying unit identifies a target region including a region with a different thickness in the banknote (B) based on the measurement result from the measurement unit (121). A foreign object detection unit detects a foreign object by comparing grayscale data of the target region in the banknote (B) with grayscale data of the target region in a reference banknote.

## Description

### [Technical Field]

The present invention relates to a banknote handling device, a foreign object detection method, and a foreign object detection program.

### [Background Art]

Many banknote handling devices, which automatically process banknote deposits and withdrawals through customer operation, are installed at financial institutions and other locations. The banknote handling device has a banknote discrimination unit that determines banknote denominations and authenticity, and detects foreign objects adhering to banknotes. Banknotes determined by the banknote discrimination unit as defective or damaged are, for example, excluded from further processing or returned.

In the banknote discrimination unit, any one or a combination of a thickness sensor, an optical sensor (contact image sensor (CIS)), and a magnetic sensor is commonly used to determine the authenticity of banknotes and detect foreign objects. In particular, a thickness sensor and an optical sensor are often used to detect tapes and the like adhering to banknotes.

When using a thickness sensor, the banknote handling device determines that a foreign object adheres to the banknote if the thickness sensor provides an output exceeding a threshold. When using an optical sensor, the banknote handling device determines whether any foreign object is adhering to the banknote using the ratio of light transmitted through the banknote.

In addition, a technique has been proposed that detects a foreign object by applying terahertz light to a banknote and measuring the thickness of the banknote based on the phase difference between the wave reflected from the front surface and the wave reflected from the back surface. Further, a technique has been proposed in which infrared light is applied to a banknote; the intensity distribution of reflected light is received with photodiode elements; and a foreign object is identified based on the ratio of received light intensity between the element with the maximum light intensity and the adjacent element. Further, a technique has been proposed that determines whether paper is acceptable or defective based on its gloss level by applying light to the paper and detecting the reflected light with a light receiver.

### [Citation List]

### [Patent Citation]

Patent Document 1: Japanese Laid-open Patent Publication No. 2009-300279
Patent Document 2: Japanese Laid-open Patent Publication No. H11-173997
Patent Document 3: Japanese Laid-open Patent Publication No. H03-102491

### [Summary of Invention]

### [Technical Problem]

However, when using a thickness sensor to detect foreign objects, even if a thinner-than-usual strip of tape adheres, the resulting change in thickness is small. This makes it difficult to distinguish such objects from creases or folds in the banknote, and setting the threshold too strictly can lead to false positives. For this reason, it is difficult to detect thin tape using the technique that uses a thickness sensor to detect foreign objects.

When using an optical sensor to detect foreign objects, the reflectance and transmittance of a banknote with transparent cellophane tape are almost the same as those of a banknote without transparent tape; any changes are masked by dirt and other contaminants accumulated during circulation, making detection difficult. In addition, detecting transparent tape requests various light sources. For example, if sensors are arranged in a single row to inspect the entire banknote, the large number of sensors makes it difficult to secure the installation space.

Furthermore, even with the technique that detects foreign objects by calculating the thickness based on the phase difference of reflected waves, it is difficult to detect foreign objects when the change in thickness is small. Further, in the case of the technique that identifies a foreign object based on the ratio of received light intensity between the element with the maximum received light intensity and the adjacent element in the intensity distribution of reflected light of infrared light, appropriate reflected light is not produced with transparent thin tape or the like, making it difficult to detect foreign objects. The same applies to the technique that determines whether paper is acceptable or defective based on its gloss level.

The disclosed technique has been made in light of the foregoing, and an object of the disclosed technique is to provide a banknote handling device, a foreign object detection method, and a foreign object detection program that improve the accuracy of foreign object detection.

### [Solution to Problem]

In one embodiment of a banknote handling device, a foreign object detection method, and a foreign object detection program disclosed in the present application, a light source irradiates a medium with light. A camera captures a surface image of the medium based on reflected light of the light emitted from the light source. A data conversion unit converts the surface image captured by the camera into grayscale data. A measurement unit measures a thickness of the medium. A target region identifying unit identifies a target region including a region with a different thickness in the medium based on a measurement result from the measurement unit. A foreign object detection unit detects a foreign object by comparing grayscale data of the target region in the medium with grayscale data of the target region in a reference medium.

### [Advantageous Effects of Invention]

According to one aspect, the present invention can improve the accuracy of foreign object detection.

### [Brief Description of Drawings]

FIG. 1 is a schematic diagram illustrating a configuration of a banknote handling device according to an embodiment.
FIG. 2 is a diagram illustrating an overview of thickness detection using a thickness sensor.
FIG. 3 is a diagram illustrating thickness detection using a displacement roller.
FIG. 4 is a diagram illustrating a banknote discrimination unit and a foreign object detection unit in detail.
FIG. 5 is a diagram illustrating the dependence of the glass surface reflectance on the angle of incidence.
FIG. 6 is a block diagram of a control unit.
FIG. 7 is a diagram illustrating an overview of capturing an image of a banknote surface using a camera.
FIG. 8 is a diagram illustrating an example of grayscale values calculated by a data conversion unit.
FIG. 9 is a diagram illustrating an example of grayscale values in a target region of a banknote with a foreign object and grayscale values in a target region of a reference banknote.
FIG. 10 is a diagram illustrating an example of foreign object detection using a foreign object determination threshold.
FIG. 11 is a diagram illustrating an example of the results of similarity calculation.
FIG. 12 is a flowchart of processing of capturing images of both sides of a banknote by the banknote handling device according to the embodiment.
FIG. 13 is a flowchart of foreign object determination processing by the banknote handling device according to the embodiment.
FIG. 14 is a hardware configuration diagram of the control unit.

### [Embodiments for Carrying Out the Invention]

Embodiments of a banknote handling device, a foreign object detection method, and a foreign object detection program disclosed in the present application will be described in detail below based on the drawings. It is noted that the banknote handling device, the foreign object detection method, and the foreign object detection program disclosed in the present application are not limited to the following embodiments.

### [Embodiment]

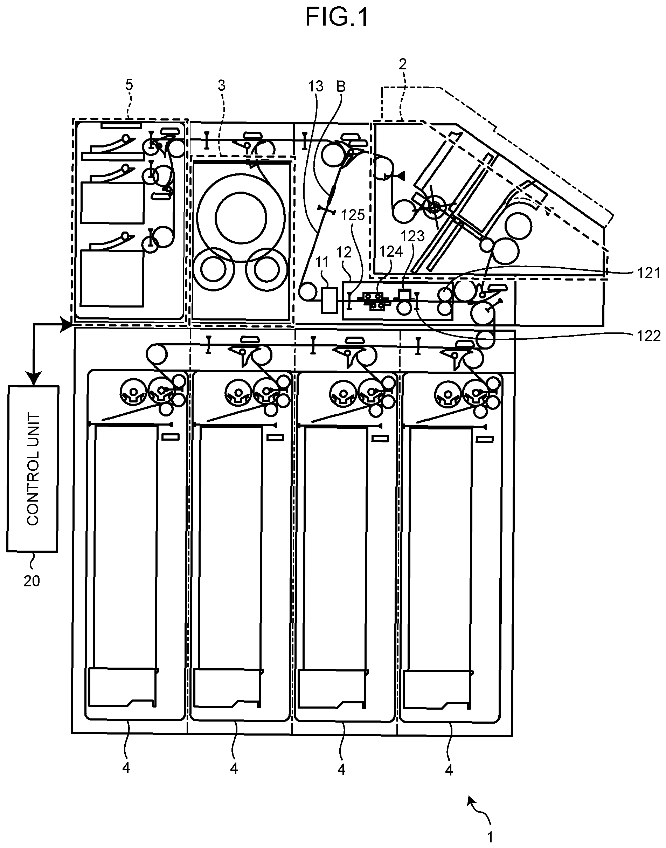

FIG. 1 is a schematic diagram illustrating a configuration of a banknote handling device according to an embodiment. In the present embodiment, banknote B is used as an example of a paper sheet, but the paper sheet is not limited to banknote B. Examples of the paper sheet include notes, checks, gift certificates, various securities, and stock certificates and other valuable securities.

As illustrated in FIG. 1, a banknote handling device 1 according to an embodiment includes a deposit/withdrawal unit 2, a temporary storage unit 3, a plurality of storage units 4, and a reject unit 5. In addition, the banknote handling device 1 includes a foreign object detection unit 11 and a banknote discrimination unit 12. Furthermore, the banknote handling device 1 includes a conveyance path 13 for transporting banknote B and a control unit 20 that centrally controls the operation of the banknote handling device 1. Here, in FIG. 1, the control unit 20 is illustrated separately from a housing that accommodates the deposit/withdrawal unit 2, the temporary storage unit 3, the storage units 4, and the reject unit 5. However, the control unit 20 may be stored within the same housing.

The deposit/withdrawal unit 2 handles the deposit and withdrawal of banknote B for users. The temporary storage unit 3 temporarily stores banknote B deposited in the deposit/withdrawal unit 2. The storage units 4 recycle banknote B by storing and dispensing banknote B. The reject unit 5 stores banknote B with an abnormal thickness or length, or banknote B that is deteriorated or damaged. The conveyance path 13 is a bidirectional conveyance path capable of transporting banknote B in both directions, except for a path section for storing banknote B in the reject unit 5.

The banknote discrimination unit 12 performs discrimination including determination of denomination and authenticity, as well as detection of foreign objects on banknote B transported from the deposit/withdrawal unit 2 or the temporary storage unit 3. The banknote discrimination unit 12 has a thickness sensor 121, an IN sensor 122, a magnetic sensor 123, a CIS 124, and an OUT sensor 125.

The thickness sensor 121 measures the amount of displacement in thickness in each region of banknote B conveyed on the conveyance path 13. This thickness sensor 121 is an example of "measurement unit". Since the thickness is determined based on the amount of displacement from a reference position, it can be said that the thickness sensor 121 measures the thickness of banknote B.

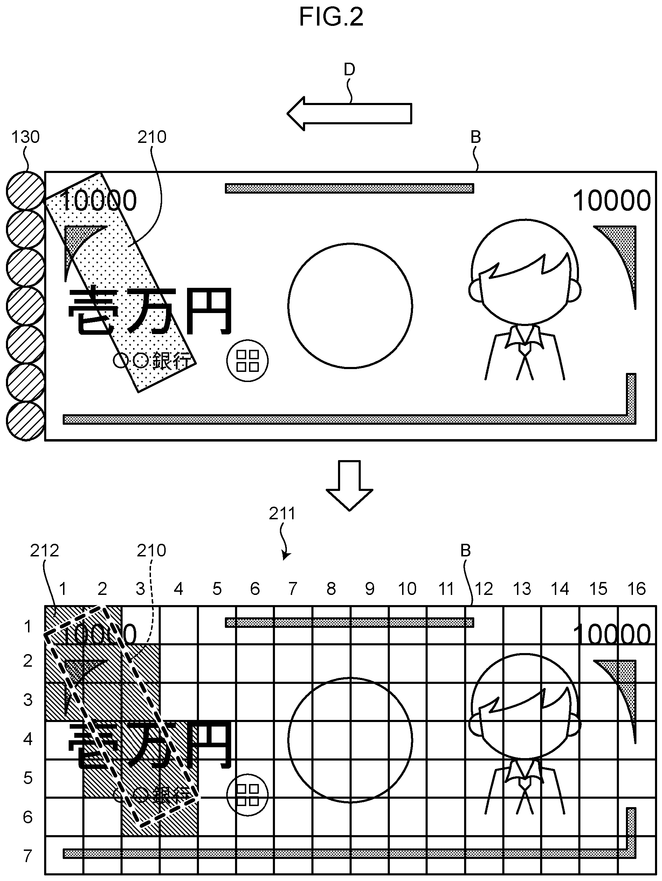

FIG. 2 is a diagram illustrating an overview of measurement of the amount of displacement using the thickness sensor. In FIG. 2, the upper portion of the figure illustrates a displacement roller 130 of the thickness sensor 121 and banknote B, and the lower portion illustrates the detection result of banknote B by the thickness sensor 121.

In the present embodiment, the length in the lateral direction of banknote B is 7 cm, and the length in the longitudinal direction is 16 cm. The thickness sensor 121 according to the present embodiment measures the amount of displacement for each of 1 cm square subregions obtained by dividing the surface of banknote B into 16 sections in the longitudinal direction and 7 sections in the lateral direction. Here, the subregions in FIG. 2 are denoted by numbers 1 through 16 assigned along the longitudinal direction of banknote B and numbers 1 through 7 assigned along the lateral direction.

The thickness sensor 121 has a plurality of the displacement rollers 130 arranged in a single row orthogonal to the direction of travel D of banknote B and across the conveyance path 13. In the present embodiment, seven displacement rollers 130 are arranged in a row. Specifically, the seven displacement rollers 130 each detect the amount of displacement in different regions with a width of 1 cm in the lateral direction. The seven displacement rollers 130 detect the amounts of displacement at respective positions corresponding to numbers 1 through 7 in the lateral direction.

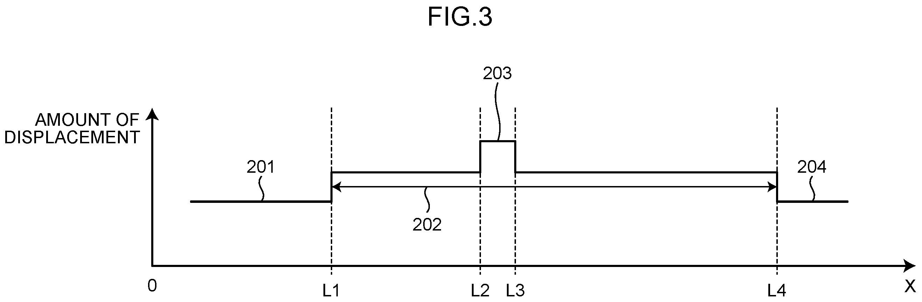

FIG. 3 is a diagram illustrating thickness detection using the displacement rollers. The graph in FIG. 3 represents the amount of displacement detected by the displacement rollers 130 on the vertical axis, and the travel distance along the conveyance path 13 relative to a specific point in time before banknote B reaches the displacement rollers 130 on the horizontal axis. Section 201 before travel distance L1 and section 204 after travel distance L4 indicate that there is no banknote B at the position of the displacement rollers 130. In other words, the displacement rollers 130 output the amounts of displacement for sections 201 and 204 when banknote B is not present. Banknote B reaches the position of the displacement rollers 130 at travel distance L1 and passes through the position of the displacement rollers 130 at travel distance L4. In other words, in section 202, banknote B is present at the measurement position of the displacement rollers 130. The amount of displacement between travel distance L2 and travel distance L3 is greater than that in the other sections in section 202. In other words, banknote B has a normal thickness in the range other than section 203 in section 202 and has a thickness larger than the normal thickness of banknote B in section 203.

As indicated by the detection results in FIG. 2, when transparent tape 210 adheres to banknote B, the measurement result from the thickness sensor 121 based on the amount of displacement from the seven displacement rollers 130 indicates a large amount of displacement in the subregions within a hatched region 212. Specifically, the subregions (1, 1), (1, 2), (1, 3), (2, 1), (2, 2), (2, 3), (2, 4), (2, 5), (3, 2), (3, 3), (3, 4), (3, 5), (3, 6), (4, 4), (4, 5), and (4, 6) are measured as having large amounts of displacement.

The description continues with reference back to FIG. 1. The IN sensor 122 detects the passage of banknote B through a predetermined position on the conveyance path 13, thereby detecting that banknote B has entered the banknote discrimination unit 12. The magnetic sensor 123 detects an electromagnetic change caused by magnetic ink printed on banknote B. The CIS 124 reads an image of banknote B using one or more of visible light, ultraviolet light, or infrared light. The OUT sensor 125 detects the passage of banknote B through a predetermined position on the conveyance path 13, thereby detecting that banknote B has passed through the banknote discrimination unit 12.

The banknote discrimination unit 12 detects deterioration or damage to banknote B when the amount of displacement measured by the thickness sensor 121 for banknote B is greater than a predetermined value. In addition, the banknote discrimination unit 12 determines the authenticity of banknote B based on the electromagnetic change in the magnetic ink detected by the magnetic sensor 123 and the image detected by the CIS 124. Banknote B detected as being deteriorated or damaged by the banknote discrimination unit 12 is sent to the reject unit 5. In addition, banknote B determined as counterfeit by the banknote discrimination unit 12 is sent to the deposit/withdrawal unit 2 and returned to the user.

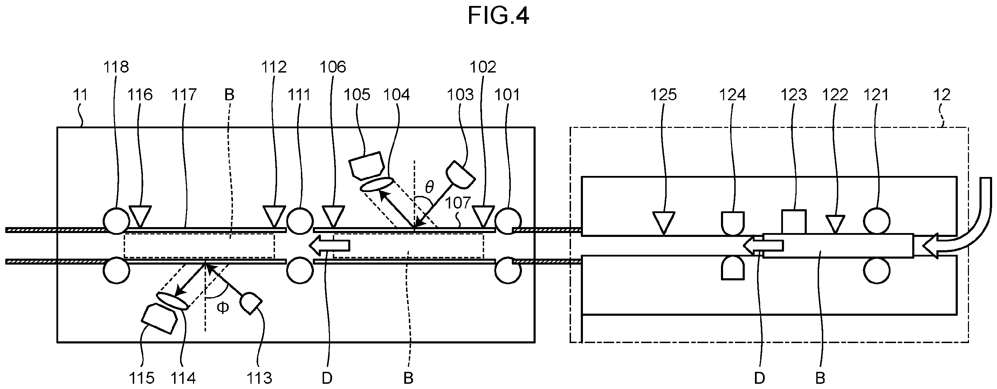

FIG. 4 is a diagram illustrating the banknote discrimination unit and the foreign object detection unit in detail. The foreign object detection unit 11 is disposed near the banknote discrimination unit 12. In the present embodiment, the foreign object detection unit 11 is disposed behind the banknote discrimination unit 12 in the direction of travel in which banknote B transported from the deposit/withdrawal unit 2 or the temporary storage unit 3 enters the banknote discrimination unit 12. Since the foreign object detection unit 11 is disposed near the banknote discrimination unit 12, the banknote handling device 1 can perform foreign object detection using the foreign object detection unit 11 almost simultaneously with the discrimination of banknote B using the banknote discrimination unit 12, so that any defects or damage of banknote B can be determined together, thereby ensuring smooth banknote handling operations.

The foreign object detection unit 11 has a pair of conveyance rollers 101, an IN sensor 102, a first light emitting diode (LED) 103 serving as a light source, a first lens 104, a first camera 105, an OUT sensor 106, and a transparent conveyance guide 107. Furthermore, the foreign object detection unit 11 has a pair of conveyance rollers 111, an IN sensor 112, a second LED 113 serving as a light source, a second lens 114, a second camera 115, an OUT sensor 116, a transparent conveyance guide 117, and a pair of conveyance rollers 118.

The conveyance rollers 101, 111, and 118 transport banknote B in the direction of travel D. The transparent conveyance guides 107 and 117 each have two opposing surfaces formed of a transparent material and provide a space between the two surfaces through which banknote B passes. Banknote B moves through the spaces formed by the transparent conveyance guides 107 and 117 between the conveyance roller 101 and the conveyance roller 111, and between the conveyance roller 111 and the conveyance roller 118.

The IN sensor 102, the OUT sensor 106, the IN sensor 112, and the OUT sensor 116 detect the presence of banknote B at their respective positions. When banknote B moves in the direction of travel D, the front end of banknote B and the back end of banknote B are detected sequentially by the IN sensor 102, the OUT sensor 106, the IN sensor 112, and the OUT sensor 116, in this order.

The first LED 103 emits light toward a predetermined position on the transparent conveyance guide 107. This first LED 103 is an example of "first light source". The light emitted from the first LED 103 passes through the transparent conveyance guide 107, is reflected by banknote B, passes through the transparent conveyance guide 107 and the first lens 104, and then enters the first camera 105. The first camera 105 captures an image of a predetermined position on the transparent conveyance guide 107. Using the light emitted from the first LED 103, the first camera 105 acquires an image of a partial region of banknote B based on the reflected light from banknote B, for example, when banknote B is present at the position irradiated with light.

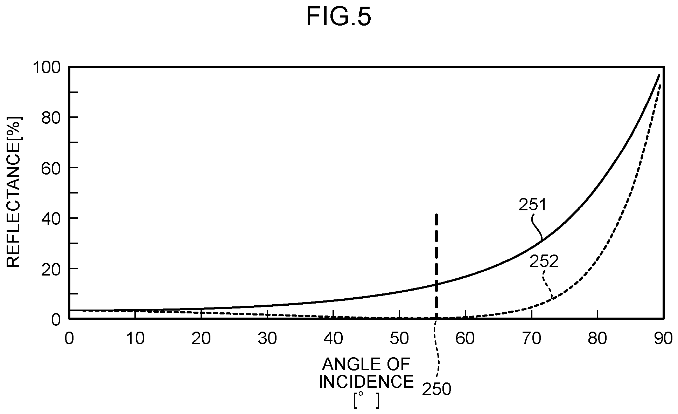

FIG. 5 is a diagram illustrating the dependence of the glass surface reflectance on the angle of incidence. FIG. 5 represents the angle of incidence on the horizontal axis and the glass surface reflectance on the vertical axis. Line 251 represents S-polarized light, and line 252 represents P-polarized light. As illustrated in FIG. 5, when the angle of incidence is less than a Brewster's angle 250, light reflection at a glass surface is minimal, making it difficult to detect a transparent foreign object such as glass. In contrast, when the angle of incidence is equal to or greater than the Brewster's angle 250, sufficient reflected waves are obtained, making it possible to detect a transparent foreign object such as glass. When thin transparent tape is irradiated with light, the Brewster's angle 250 can be approximately 55 degrees.

Therefore, in the present embodiment, the angle of incidence θ of the first LED 103 is set to 55 degrees or more. As a result, even if thin transparent tape adheres to banknote B, reflected waves from the tape can be obtained, and the first camera 105 can acquire an image of the thin transparent tape.

The second LED 113, the second lens 114, and the second camera 115 are installed opposite the first LED 103, the first lens 104, and the first camera 105 with respect to the transparent conveyance guide 107. This second LED 113 is an example of "second light source". Further, to avoid light interference during image capturing, the first LED 103, the first lens 104, and the first camera 105 are disposed offset from the second LED 113, the second lens 114, and the second camera 115 along the conveyance path 13. In other words, the first LED 103 and the first camera 105, and the second LED 113 and the second camera 115 are disposed at positions opposite to each other with respect to banknote B and such that light used for image capturing does not mutually interfere.

The second LED 113 emits light toward a predetermined position on the transparent conveyance guide 117. The light emitted from the second LED 113 passes through the transparent conveyance guide 117, is reflected by banknote B, then passes through the transparent conveyance guide 117 and the second lens 114, and then enters the second camera 115. The second camera 115 captures an image of a predetermined position on the transparent conveyance guide 117. Using the light emitted from the second LED 113, the second camera 115 acquires an image of a partial region of banknote B based on the reflected light from banknote B, for example, when banknote B is present at the position irradiated with light.

The second camera 115 captures an image of a surface of banknote B on the opposite side of the surface captured by the first camera 105. For example, when the first camera 105 captures an image of the front side of banknote B, the second camera 115 captures an image of the back side of banknote B. In this manner, surface images of both sides of banknote B are acquired by the first camera 105 and the second camera 115. Here, the image on either the front or the back is referred to as the "surface image", and the respective images are referred to as "front image" and "back image".

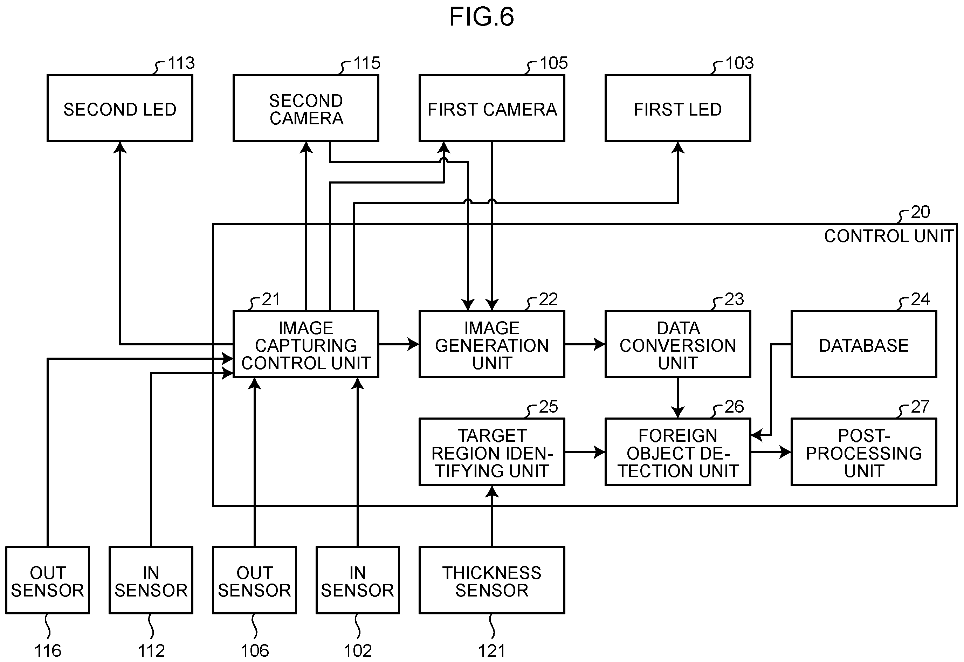

FIG. 6 is a block diagram of the control unit. The control unit 20 controls the turning-on of the first LED 103 and the second LED 113, as well as the image capturing of the first camera 105 and the second camera 115. The control unit 20 uses the surface images of banknote B captured by the first camera 105 and the second camera 115 to determine whether any foreign object is adhering to banknote B. The details of the operation of the control unit 20 will be described below. As illustrated in FIG. 6, the control unit 20 has an image capturing control unit 21, an image generation unit 22, a data conversion unit 23, a database 24, a target region identifying unit 25, a foreign object detection unit 26, and a post-processing unit 27.

When the IN sensor 102 detects the arrival of banknote B, the image capturing control unit 21 turns on the first LED 103. Next, the image capturing control unit 21 waits for a predetermined time T1. T1 is the time taken for banknote B to move from the detection position of the IN sensor 102 to the point irradiated with light from the first LED 103. T1 is determined based on preliminary operational checks and the specifications of the banknote handling device 1. For example, if the distance from the detection position of the IN sensor 102 to the point irradiated with light from the first LED 103 is 20 mm, and the conveyance speed of banknote B is 1600 mm/s, T1 is 20/1600=0.0125 seconds.

After the elapse of T1, the image capturing control unit 21 allows the first camera 105 to capture an image in multiple shots. Since the range of image capturing by the first camera 105 in a single shot covers only a portion of the surface of banknote B, the entire surface is captured through multiple shots. Thereafter, when the OUT sensor 106 detects the completion of passage of banknote B, the image capturing control unit 21 turns off the first LED 103.

When the IN sensor 112 detects the arrival of banknote B, the image capturing control unit 21 turns on the second LED 113. Next, the image capturing control unit 21 waits for a predetermined time T2. T2 is the time taken for banknote B to move from the detection position of the IN sensor 112 to the point irradiated with light from the second LED 113. T2 is determined based on preliminary operational checks and the like.

After the elapse of T2, the image capturing control unit 21 allows the second camera 115 to capture an image in multiple shots. Since the range of image capturing by the second camera 115 in a single shot also covers only a portion of the surface of banknote B, the entire surface is captured through multiple shots. Thereafter, when the OUT sensor 116 detects the completion of passage of banknote B, the image capturing control unit 21 turns off the second LED 113.

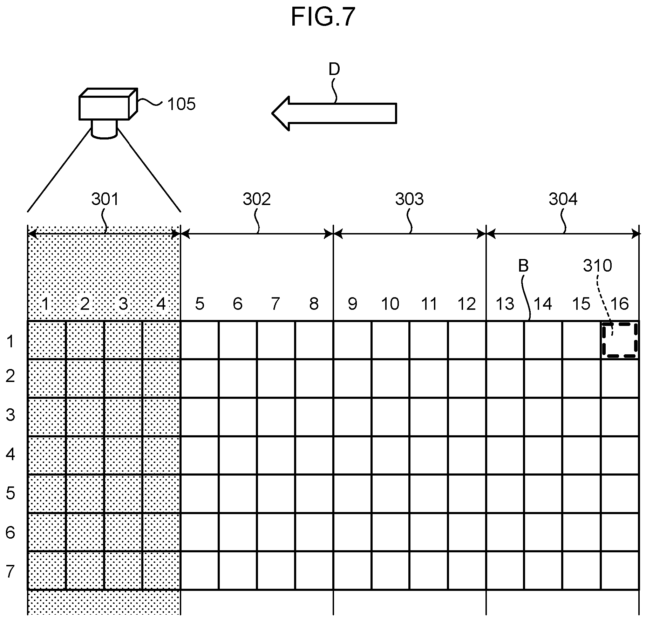

FIG. 7 is a diagram illustrating an overview of capturing an image of a banknote surface using a camera. Here, the surface of banknote B is divided into 1 cm square subregions 310 in the same manner as the division for measurement of the amount of displacement by the thickness sensor 121. For example, as illustrated in FIG. 7, the first camera 105 sequentially captures images of regions 301 to 304, which are 7 cm wide in the lateral direction of banknote B and 4 cm wide in the longitudinal direction. In this way, the image capturing control unit 21 allows the first camera 105 to capture an image of the entire surface of banknote B. The image capturing control unit 21 also allows the second camera 115 to capture an image in the same manner.

The description continues with reference back to FIG. 6. The image generation unit 22 acquires captured images of a plurality of partial regions of the surface of banknote B from the first camera 105 and the second camera 115. The image generation unit 22 then combines the acquired captured images of the partial regions to generate an image of the entire surface of banknote B.

For example, the image generation unit 22 acquires, from the first camera 105, four captured images of the regions 301 to 304 in FIG. 7. The image generation unit 22 then combines the four captured images of the regions 301 to 304 to generate a single image of the entire surface of banknote B.

The image generation unit 22 generates surface images of the entire front and back surfaces of banknote B from the respective images acquired from the first camera 105 and the second camera 115. The image generation unit 22 then outputs the front image and the back image of banknote B to the data conversion unit 23.

The data conversion unit 23 receives input of the surface images of the front and back sides of banknote B from the image generation unit 22. Next, the data conversion unit 23 converts the surface image of banknote B into grayscale data ranging from 0 to 255, and calculates grayscale values as the pixel values for each pixel in the surface image of banknote B. The pixel size depends on the analysis capability of the data conversion unit 23. The data conversion unit 23 then outputs the grayscale values for each pixel in the images of the entire front and back surfaces of banknote B to the foreign object detection unit 26. In this way, the data conversion unit 23 converts the surface images captured by the first camera 105 and the second camera 115 into grayscale data.

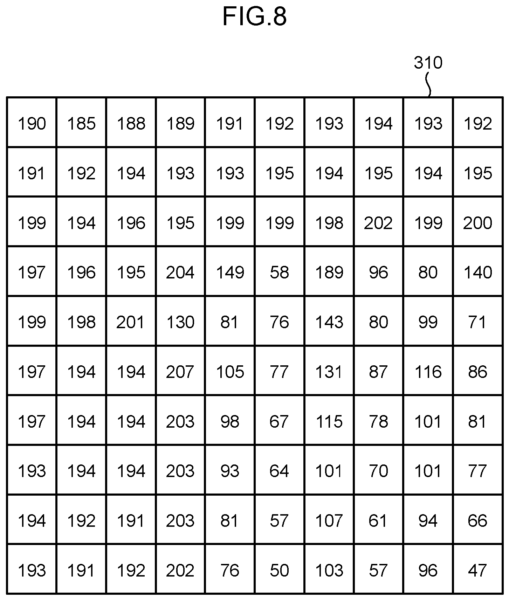

FIG. 8 is a diagram illustrating an example of grayscale values calculated by the data conversion unit. The data conversion unit 23 converts data for each pixel included in each region of the image of a single 1 cm square subregion 310 in FIG. 7, for example, to obtain grayscale values represented by the values within the rectangles illustrated in FIG. 8. Each rectangle in FIG. 8 corresponds to a single pixel. In other words, the data conversion unit 23 calculates a grayscale value for each pixel corresponding to one of the regions obtained by dividing the 1 cm square subregion 310 into 10 equal parts vertically and horizontally.

The description continues with reference back to FIG. 6. The database 24 stores information on the grayscale values for each pixel of the surface of a reference banknote free from dirt and adhering substances for various denominations handled by the banknote handling device 1. However, the grayscale values for this reference banknote are grayscale values obtained when an image of the reference banknote caught in the transparent conveyance guide 107 or 117 is captured. For example, the reference banknote may be fed through the conveyance path 13, and the data conversion unit 23 may convert the surface images captured by the first camera 105 and the second camera 115 into grayscale values, and the resulting information may be stored in the database 24.

The target region identifying unit 25 acquires the measurement result for the amount of displacement for each subregion of banknote B from the thickness sensor 121. Next, the target region identifying unit 25 detects a subregion of banknote B with a different thickness, based on the measurement result for the amount of displacement acquired from the thickness sensor 121. The target region identifying unit 25 sets a rectangular region including the subregion with the different thickness as a target region. For example, the target region identifying unit 25 identifies the target region so that it includes continuous subregions with the different thickness. In the present embodiment, the target region identifying unit 25 defines the target region as a rectangle. However, the shape is not limited to this.

The target region identifying unit 25 acquires, for example, the measurement result illustrated as a detection result 211 in FIG. 2 from the thickness sensor 121. Here, the target region identifying unit 25 acquires the amount of displacement for each 1 cm square subregion on the surface of banknote B from the thickness sensor 121. Next, as illustrated in FIG. 2, if transparent tape 210 adheres to banknote B, the target region identifying unit 25 detects a portion corresponding to the hatched region 212 as a subregion with the different thickness based on the amount of displacement in each subregion. The target region identifying unit 25 detects subregions (1,1), (1,2), (1,3), (2,1), (2,2), (2,3), (2,4), (2,5), (3,2), (3,3), (3,4), (3,5), (3,6), (4,4), (4,5), and (4,6) as subregions with the different thickness.

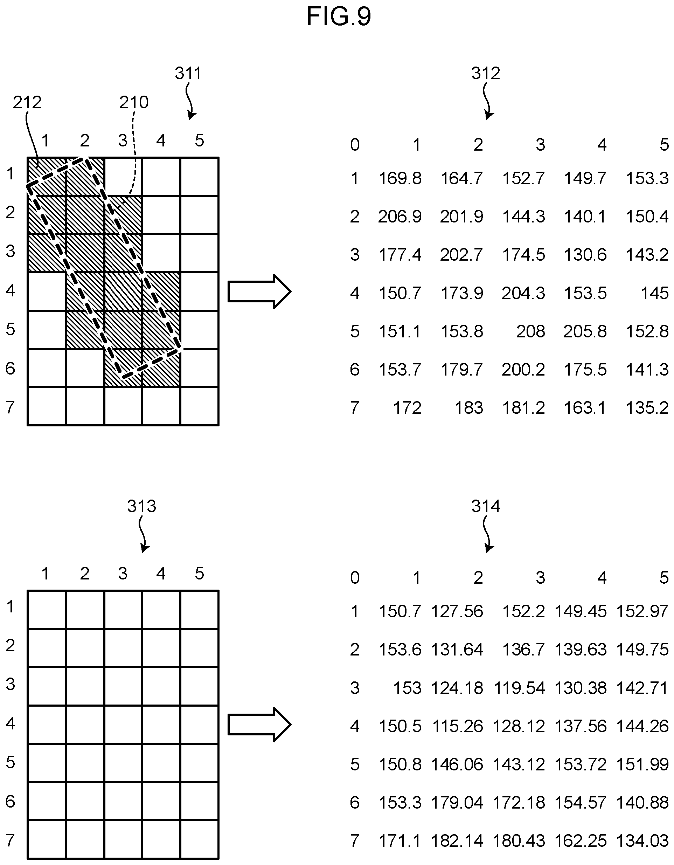

FIG. 9 is a diagram illustrating an example of grayscale values in a target region of a banknote with a foreign object and grayscale values in a target region of a reference banknote. The target region identifying unit 25 identifies, as a target region 311, the range bounded by columns 1 through 5 in the longitudinal direction and rows 1 through 7 in the lateral direction, as illustrated in FIG. 9, which includes the region 212 corresponding to the portion to which the transparent tape 210 adheres.

The foreign object detection unit 26 receives, from the data conversion unit 23, input of grayscale values for each pixel of the images of the entire front and back surfaces of banknote B. In addition, the foreign object detection unit 26 acquires information on the target region of banknote B from the target region identifying unit 25. Next, the foreign object detection unit 26 calculates an average of the grayscale values for each pixel for each subregion included in the target region.

In addition, the foreign object detection unit 26 acquires, from the database 24, the grayscale values for each pixel in the images of the entire front and back surfaces of a reference banknote of the same denomination as banknote B. The foreign object detection unit 26 then calculates an average of the grayscale values for each pixel for each subregion included in the target region of the reference banknote.

For example, as illustrated in FIG. 9, the foreign object detection unit 26 calculates an average of the grayscale values for each pixel for each subregion of the target region 311 to obtain a calculation result 312 of the average of the grayscale values of banknote B. In addition, the foreign object detection unit 26 acquires the grayscale values for each pixel of a target region 313 of the reference banknote corresponding to the target region 311 of banknote B, based on the grayscale values for each pixel of the image of the entire surface acquired from the database 24. The foreign object detection unit 26 calculates an average of the grayscale values for each pixel for each subregion of the target region 313 of the reference banknote to obtain a calculation result 314 of the average of the grayscale values of the reference banknote.

The description continues with reference back to FIG. 6. Next, the foreign object detection unit 26 calculates the similarity for each subregion based on the ratio between the average of grayscale values for each pixel in the target region of banknote B and the average of grayscale values for each pixel in the target region of the reference banknote. Next, the foreign object detection unit 26 determines whether the similarity for each subregion exceeds a predetermined foreign object determination threshold. If the similarity exceeds the foreign object determination threshold, the foreign object detection unit 26 detects a foreign object in that subregion. The foreign object detection unit 26 then outputs the result of the foreign object detection on banknote B to the post-processing unit 27.

For example, a case will be described in which a similarity is used where a higher value indicates greater similarity. In this case, the foreign object detection unit 26 has a foreign object determination threshold of 0.9. In other words, the foreign object detection unit 26 determines that there is no foreign object if the average grayscale value in the subregion is 90% or more similar. Specifically, the foreign object detection unit 26 calculates the similarity as (P-Q)/Q, where "P" is the average grayscale value of a specific pixel on banknote B and "Q" is the average grayscale value of a corresponding specific pixel on the reference banknote. The foreign object detection unit 26 determines whether the calculated similarity falls below the foreign object determination threshold of 0.9, and detects a foreign object if the similarity falls below the threshold.

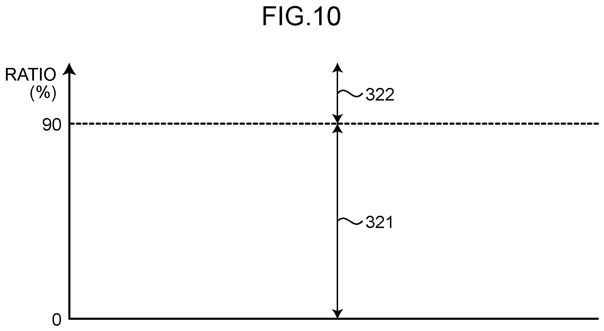

FIG. 10 is a diagram illustrating an example of foreign object detection using the foreign object determination threshold. The foreign object detection unit 26 detects a foreign object if the calculated similarity falls within a range 321 of 0.9 or lower in FIG. 10. Conversely, if the calculated similarity falls within a range 322 of 0.9 or higher, the foreign object detection unit 26 determines that there is no foreign object.

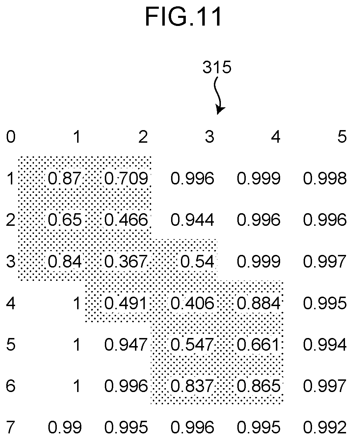

FIG. 11 is a diagram illustrating an example of the results of similarity calculation. For example, using the calculation result 312 of the average of grayscale values of banknote B in FIG. 9 and the calculation result 314 of the average of grayscale values of the reference banknote, the foreign object detection unit 26 obtains a similarity calculation result 315 illustrated in FIG. 11. The foreign object detection unit 26 determines whether the similarity for each subregion as indicated by the similarity calculation result 315 falls below the foreign object determination threshold of 0.9, and detects a foreign object in any subregion with the similarity falling below 0.9. In the case of FIG. 11, the foreign object detection unit 26 detects a foreign object in the subregions (1, 1), (1, 2), (1, 3), (2, 1), (2, 2), (2, 3), (2,4), (3,3), (3,4), (3,5), (3,6), (4,4), (4,5), and (4,6).

The post-processing unit 27 receives input of the foreign object detection result from the foreign object detection unit 26. If a foreign object such as tape adheres to banknote B, the post-processing unit 27 allows the banknote handling device 1 to perform post-processing on banknote B as a defective note or a damaged note. The post-processing unit 27 has a template that indicates whether banknote B with thin tape is to be processed as a defective note or a damaged note. Whether banknote B with thin tape is to be processed as a defective note or a damaged note depends on the operational procedures of each country or the user's specifications. Banknote B with thin tape is processed as a defective note in countries such as Japan and South Korea, whereas it is processed as a damaged note by the European Central Bank.

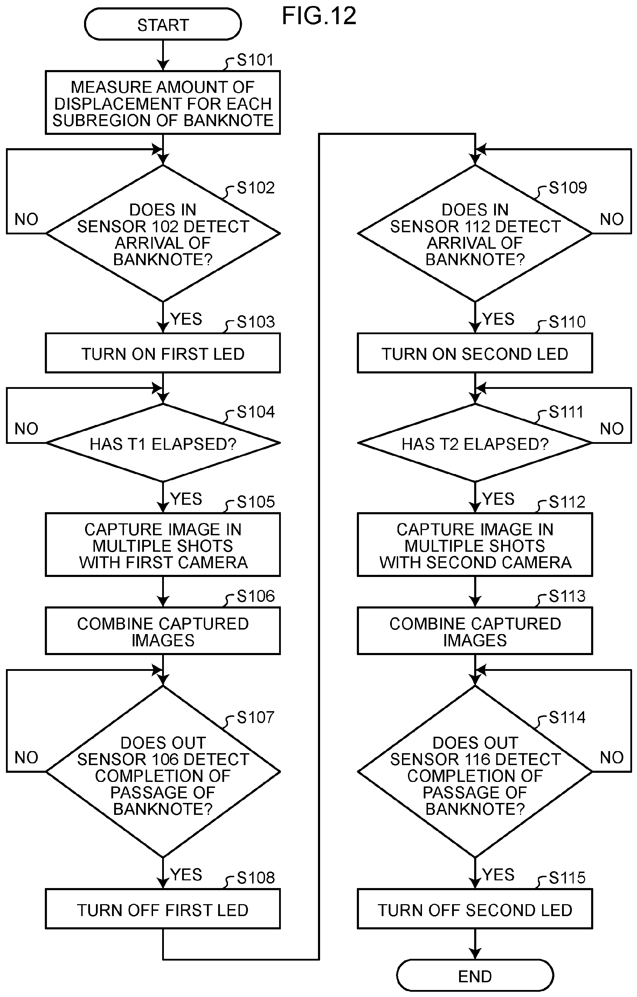

FIG. 12 is a flowchart of processing of capturing images of both sides of a banknote by the banknote handling device according to the embodiment. Next, referring to FIG. 12, the flow of processing of capturing images of both sides of banknote B by the banknote handling device 1 according to the embodiment will be described.

The thickness sensor 121 measures the amount of displacement for each subregion of banknote B using the displacement rollers 130 (step S101).

The image capturing control unit 21 determines whether the IN sensor 102 detects the arrival of banknote B (step S102). If the IN sensor 102 does not detect the arrival of banknote B (No at step S102), the image capturing control unit 21 waits until the IN sensor 102 detects the arrival of banknote B.

On the other hand, if the IN sensor 102 detects the arrival of banknote B (Yes at step S102), the image capturing control unit 21 turns on the first LED 103 (step S103).

Next, the image capturing control unit 21 determines whether T1 has elapsed (step S104). If T1 has not elapsed (No at step S104), the image capturing control unit 21 waits until T1 has elapsed.

On the other hand, if T1 has elapsed (Yes at step S104), the image capturing control unit 21 allows the first camera 105 to capture an image in multiple shots (step S105).

Next, the image generation unit 22 acquires a plurality of images captured by the first camera 105. The image generation unit 22 then combines the acquired captured images to generate a single image of the entire surface of banknote B (step S106). The image generation unit 22 outputs the generated image of the entire surface of banknote B to the data conversion unit 23.

Next, the image capturing control unit 21 determines whether the OUT sensor 106 detects the completion of passage of banknote B (step S107). If the OUT sensor 106 does not detect the completion of passage of banknote B (No at step S107), the image capturing control unit 21 waits until the OUT sensor 106 detects the completion of passage of banknote B.

On the other hand, if the OUT sensor 106 detects the completion of passage of banknote B (Yes at step S107), the image capturing control unit 21 turns off the first LED 103 (step S108).

Next, the image capturing control unit 21 determines whether the IN sensor 112 detects the arrival of banknote B (step S109). If the IN sensor 112 does not detect the arrival of banknote B (No at step S109), the image capturing control unit 21 waits until the IN sensor 112 detects the arrival of banknote B.

On the other hand, if the IN sensor 112 detects the arrival of banknote B (Yes at step S109), the image capturing control unit 21 turns on the second LED 113 (step S110).

Next, the image capturing control unit 21 determines whether T2 has elapsed (step S111). If T2 has not elapsed (No at step S111), the image capturing control unit 21 waits until T2 has elapsed.

On the other hand, if T2 has elapsed (Yes at step S111), the second camera 115 is allowed to capture an image in multiple shots (step S112).

Next, the image generation unit 22 acquires a plurality of images captured by the second camera 115. The image generation unit 22 then combines the acquired captured images to generate a single image of the entire surface of banknote B on the opposite side of the surface captured by the first camera 105 (step S113). The image generation unit 22 outputs the generated image of the entire surface of banknote B to the data conversion unit 23.

Next, the image capturing control unit 21 determines whether the OUT sensor 116 detects the completion of passage of banknote B (step S114). If the OUT sensor 116 does not detect the completion of passage of banknote B (No at step S114), the image capturing control unit 21 waits until the OUT sensor 116 detects the completion of passage of banknote B.

On the other hand, if the OUT sensor 116 detects the completion of passage of banknote B (Yes at step S114), the image capturing control unit 21 turns off the second LED 113 (step S115).

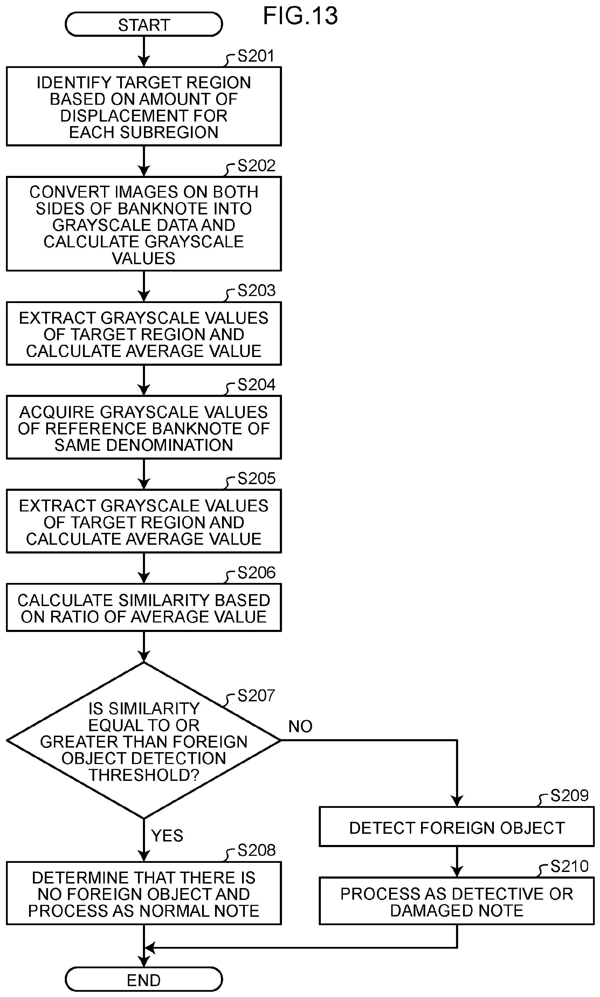

FIG. 13 is a flowchart of foreign object determination processing by the banknote handling device according to the embodiment. Next, referring to FIG. 13, the flow of foreign object determination processing by the banknote handling device 1 according to the embodiment will be described.

The target region identifying unit 25 acquires the measurement result for the amount of displacement for each subregion of banknote B from the thickness sensor 121. Next, the target region identifying unit 25 detects a subregion of banknote B with a different thickness, based on the measurement result for the amount of displacement acquired from the thickness sensor 121. The target region identifying unit 25 identifies a rectangular region including the subregion with a different thickness as a target region (step S201). The target region identifying unit 25 outputs information on the identified target region to the foreign object detection unit 26. Here, a case where banknote B contains a subregion with a different thickness will be described.

The data conversion unit 23 receives input of the images of the entire front and back surfaces of banknote B from the image generation unit 22. Next, the data conversion unit 23 converts each of the images of the entire surfaces of banknote B into grayscale data ranging from 0 to 255, and calculates grayscale values as pixel values for each pixel in the image of the entire surface of banknote B (step S202). The data conversion unit 23 outputs the grayscale values for each pixel in the images of the entire front and back surfaces of banknote B to the foreign object detection unit 26.

The foreign object detection unit 26 receives, from the data conversion unit 23, input of grayscale values for each pixel of the images of the entire front and back surfaces of banknote B. The foreign object detection unit 26 also receives input of information on the target region of banknote B from the target region identifying unit 25. Next, the foreign object detection unit 26 extracts the grayscale values of the target region from the grayscale values for each pixel in the images of the entire front and back surfaces of banknote B, and calculates an average of the grayscale values for each pixel for each subregion (step S203).

In addition, the foreign object detection unit 26 acquires, from the database 24, the grayscale values for each pixel in the images of the entire front and back surfaces of a reference banknote of the same denomination as banknote B (step S204).

Next, the foreign object detection unit 26 extracts the grayscale values of the target region from the grayscale values for each pixel in the images of the entire front and back surfaces of the reference banknote, and calculates an average of the grayscale values for each pixel for each subregion (step S205).

Next, the foreign object detection unit 26 calculates, for each of the front and back sides, the similarity based on the ratio between the average of grayscale values for each subregion of the target region of banknote B and the average of grayscale values for each subregion of the target region of the reference banknote (step S206).

Next, the foreign object detection unit 26 determines whether the similarity in all subregions is equal to or greater than the foreign object detection threshold (step S207). Here, a case using the similarity where a higher value indicates greater similarity will be described.

If the similarity in all subregions is equal to or greater than the foreign object detection threshold (Yes at step S207), the foreign object detection unit 26 determines that there is no foreign object. Upon receiving the foreign object detection result for banknote B from the foreign object detection unit 26, the post-processing unit 27 processes banknote B as a normal note (step S208).

On the other hand, if there is a subregion with the similarity falling below the foreign object detection threshold (No at step S207), the foreign object detection unit 26 detects a foreign object on banknote B (step S209).

Upon receiving the foreign object detection result for banknote B from the foreign object detection unit 26, the post-processing unit 27 processes banknote B as a defective note or a damaged note (step S210).

As explained above, the banknote handling device according to the present embodiment irradiates the surface of a banknote with light at an angle of incidence equal to or greater than the Brewster's angle and acquires a captured image based on the reflected light. The banknote handling device converts the captured image into grayscale data to calculate a grayscale value for each pixel. Furthermore, the banknote handling device identifies a target region including a subregion with a different thickness, calculates an average grayscale value for each subregion in the target region, calculates the similarity to an average grayscale value for each subregion of the target region of a reference banknote, and uses the similarity to detect a foreign object.

In this way, by setting the angle of incidence to the Brewster's angle or greater, it is possible to obtain reflected waves even from transparent tape or the like adhering to the banknote, thereby acquiring a captured image of the surface of the bank note in which the thin transparent tape appears. Furthermore, by using the captured image of the thin transparent tape, it is possible to clearly identify the difference between the grayscale data of a portion with the thin transparent tape and the grayscale data in a state free from such tape. Therefore, even if transparent thin tape or the like adheres, foreign objects can be reliably detected, thereby improving the accuracy of foreign object detection. Furthermore, since a single light source is used to capture images of the surface of the banknote divided into a plurality of areas, the banknote handling device can be made more compact and manufactured at lower cost. Furthermore, limiting the target region can reduce the processing load for foreign object detection and improve processing speed.

### (Hardware Configuration)

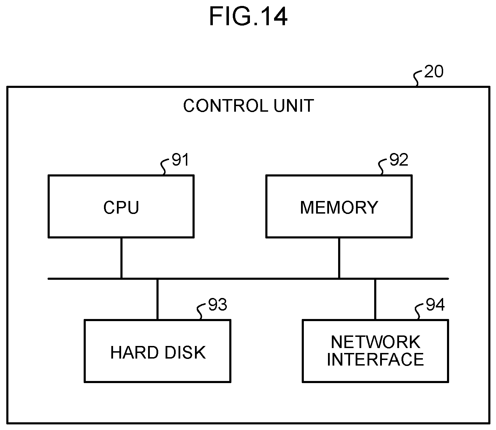

FIG. 14 is a hardware configuration diagram of the control unit. Next, referring to FIG. 14, an example hardware configuration for implementing the functions of the control unit 20 will be described.

As illustrated in FIG. 14, the control unit 20 can be implemented, for example, using a central processing unit (CPU) 91, a memory 92, a hard disk 93, and a network interface 94. The CPU 91 is connected via a bus to the memory 92, the hard disk 93, and the network interface 94.

The network interface 94 serves as an interface for communication between the control unit 20 and external devices. The network interface 94, for example, relays communication between external user terminal devices and the CPU 91.

The hard disk 93 is an auxiliary storage device. The hard disk 93 stores computer programs for implementing the functions of the image capturing control unit 21, the image generation unit 22, the data conversion unit 23, the database 24, the target region identifying unit 25, the foreign object detection unit 26, and the post-processing unit 27 illustrated in FIG. 6.

The memory 92 is a main storage device. The memory 92 may, for example, be a dynamic random access memory (DRAM).

The CPU 91 reads various computer programs from the hard disk 93 and loads the computer programs into the memory 92 for execution. As a result, the CPU 91 implements the functions of the image capturing control unit 21, the image generation unit 22, the data conversion unit 23, the database 24, the target region identifying unit 25, the foreign object detection unit 26, and the post-processing unit 27 illustrated in FIG. 6.

### [Explanation of Reference]

- 1: banknote handling device
- 2: deposit/withdrawal unit
- 3: temporary storage unit
- 4: storage unit
- 5: reject unit
- 11: foreign object detection unit
- 12: banknote discrimination unit
- 13: conveyance path
- 20: control unit
- 21: image capturing control unit
- 22: image generation unit
- 23: data conversion unit
- 24: database
- 25: target region identifying unit
- 26: foreign object detection unit
- 27: post-processing unit
- 101, 111, 118: conveyance roller
- 102, 112: IN sensor
- 103: first LED
- 104: first lens
- 105: first camera
- 106, 116: OUT sensor
- 107, 117: transparent conveyance guide
- 113: second LED
- 114: second lens
- 115: second camera
- 121: thickness sensor
- 122: IN sensor
- 123: magnetic sensor
- 124: CIS
- 125: OUT sensor
- B: banknote

## Claims

1. A banknote handling device comprising:
a light source configured to irradiate a medium with light;
a camera configured to capture a surface image of the medium based on reflected light of the light emitted from the light source;
a data conversion unit configured to convert the surface image captured by the camera into grayscale data;
a measurement unit configured to measure a thickness of the medium;
a target region identifying unit configured to identify a target region including a region with a different thickness in the medium based on a measurement result from the measurement unit; and
a foreign object detection unit configured to detect a foreign object by comparing grayscale data of the target region in the medium with grayscale data of the target region in a reference medium.

2. The banknote handling device according to claim 1, wherein the light source emits the light at an angle of incidence equal to or greater than a Brewster's angle when transparent tape is irradiated with light.

3. The banknote handling device according to claim 1, wherein the light source emits the light at an incident angle of 55 degrees or more.

4. The banknote handling device according to claim 1, wherein
the light source includes a first light source and a second light source,
the camera includes a first camera that captures an image using light emitted from the first light source and a second camera that captures an image using light emitted from the second light source, and
the first light source and the first camera, and the second light source and the second camera are disposed at positions opposite to each other with respect to the medium and such that light used for image capturing does not mutually interfere.

5. The banknote handling device according to claim 1, wherein the foreign object detection unit detects the foreign object using an average value of the grayscale data.

6. The banknote handling device according to claim 4, wherein
the measurement unit performs the measurement for each of subregions obtained by dividing a surface of the medium into a predetermined size,
the target region identifying unit identifies a target region such that the target region includes continuous subregions with the different thickness, and
the foreign object detection unit detects the foreign object using an average value of the grayscale data for each of the subregions.

7. A foreign object detection method executed by a banknote handling device including a light source that irradiates a medium with light and a camera that captures a surface image of the medium based on reflected light of the light emitted from the light source, the foreign object detection method comprising:
converting the surface image captured by the camera into grayscale data,
identifying a target region including a region with a different thickness in the medium based on a measurement result of measuring a thickness of the medium; and
detecting a foreign object by comparing grayscale data of the target region in the medium with grayscale data of the target region in a reference medium.

8. A foreign object detection program that causes a computer to execute a process comprising:
allowing a light source to emit light toward a medium;
allowing a camera to capture a surface image of the medium based on reflected light of the emitted light;
converting the surface image captured by the camera into grayscale data;
identifying a target region including a region with a different thickness in the medium based on a measurement result of measuring a thickness of the medium; and
detecting a foreign object by comparing grayscale data of the target region in the medium with grayscale data of the target region in a reference medium.
